Europäisches Patentamt

European Patent Office

Office européen des brevets

(11) Veröffentlichungsnummer: **0 327 860**

**A1**

## (12) EUROPÄISCHE PATENTANMELDUNG

(21) Anmeldenummer: 89100969.8

(22) Anmeldetag: 20.01.89

(51) Int. Cl.⁴: **H01G 1/035 , H01C 13/02**

(30) Priorität: 10.02.88 DE 3804064

(43) Veröffentlichungstag der Anmeldung:
16.08.89 Patentblatt 89/33

(84) Benannte Vertragsstaaten:
AT CH DE ES FR GB IT LI SE

(71) Anmelder: **Siemens Aktiengesellschaft**
**Wittelsbacherplatz 2**
**D-8000 München 2(DE)**

(84) **CH DE ES FR GB IT LI SE**

Anmelder: **Siemens Bauelemente OHG**
**Siemensstrasse 43**
**A-8530 Deutschlandsberg(AT)**

(84) **AT**

(72) Erfinder: **Ott, Günter, dipl.-Ing.**
**Grabenstrasse 14**
**A-8541 Schwanberg(AT)**

(54) **Elektrisches Bauelement in Chip-Bauweise und Verfahren zu seiner Herstellung.**

(57) Das Bauelement aus einem scheiben- oder plättchenförmigen Körper (1) weist auf seinen gegenüberliegenden großen Stirnflächen Belegungen (2,3) und bandförmige Anschlußelemente (5,6) auf und ist mit einem plättchen- oder quaderförmigen Isolierüberzug (7) umpreßt, die Anschlußelemente (5,6) sind ohne Abknickung in Höhe der Stirnflächen des Körpers (1) durch den Isolierüberzug (7) hindurch nach außen geführt, das obere Anschlußelement (5) ist nach unten hin abgeknickt, und dann auf die Unterseite (19) des Isolierüberzuges abgebogen, daß untere Anschlußelement (6) ist zunächst nach oben hin abgeknickt, dann an der Oberfläche des Isolierüberzuges (7) bis in Höhe der Austrittsstelle des ersten Anschußelementes (5) verlaufend angeordnet, in dieser Höhe um 180° umgebogen und am Anschlußelement (6) anliegend ebenfalls bis unter die Unterseite (19) des Isolierüberzuges (7) abgebogen.

FIG 3

## Elektrisches Bauelement in Chip-Bauweise und Verfahren zu seiner Herstellung

Die Erfindung betrifft ein elektrisches Bauelement in Chip-Bauweise zum Befestigen auf einer Schaltplatte, das aus einem scheiben- oder plättchenförmigen Körper aus elektrisch wirksamem Material besteht, der auf seinen gegenüberliegenden grossen Stirnflächen mit Belegungen versehen ist, das ferner bandförmige Anschlußelemente zum Verbinden der Belegungen entgegengesetzter Polarität mit Kontaktstellen einer auf einer Schaltplatte befindlichen gedruckten Schaltung aufweist und das mit einem plättchen- oder quaderförmigen Isolierüberzug umpreßt ist.

Solche Bauelemente sind beispielsweise in der EP-A 0 229 286 beschrieben.

Die Erfindung betrifft ferner ein Verfahren zur Herstellung eines solchen elektrischen Bauelements, bei dem ein Metallband zunächst mit Ausnehmungen derart versehen wird, daß Leiterstege gebildet werden, danach die Bauelementkörper zwischen die Leiterstege eingesetzt, mit den Teilen der Leiterstege verbunden und mit dem Isolierüberzug versehen werden.

Ein solches Verfahren ist in der EP-A 0 162 149 beschrieben. .

Die Bemühungen, auf einer gleichbleibend großen Fläche eine immer größere Anzahl von diskreten Bauelementen unterzubringen, haben zu immer kleiner werdenden Gehäuseformen geführt. Die derzeit kleinste Gehäuseform ist die der Surface-mounted-devices (SMD), die auch als Chip-Bauelemente bezeichnet werden.

Das Auflöten von oberflächenmontierbaren Bauelementen auf Leiterplatten kann über verschiedene Verfahren erfolgen. Vorteilhafte Verfahren hierfür sind das Tauchlöten oder das sogenannte Schwallöten, bei dem die Surface-mounted-devices kurzzeitig über eine Welle geschmolzenen Lötzinnes geführt werden. Dies bedingt die Verwendung von hoch wärmebeständigen Materialien für die Isolierumhüllung, wie z. B. Thermoplasten. Bis zum Befestigen durch Lötung werden die Bauelemente an der Schaltplatte vorübergehend festgehalten, beispielsweise durch Klebung, mit Klammern oder durch Einklemmen in entsprechende Öffnungen, wie das beispielsweise in der DE-AS 1 064 127 beschrieben ist.

Elektrische Bauelemente im Sinne der vorliegenden Erfindung sind insbesondere elektrische Widerstände mit einem von der anliegenden Spannung abhängigen Widerstandswert (Varistoren), ferner Widerstände mit von der Temperatur abhängigem Widerstandswert (Kaltleiter = PTC-Widerstand oder Heißleiter = NTC-Widerstand), oder elektrische Kondensatoren mit Keramik bzw. Kunststoffdielektrikum, wobei alle diese Bauelemente als zylindrischer oder quaderförmiger Körper oder als aus Schichten mit dazwischengefügten Belegungen bestehenden Körper ausgeführt sein können. Alle diese Bauelemente sind z. B. in der oben bereits erwähnten EP-A 0 229 286 beschrieben.

Bei der Herstellung der genannten Bauelemente werden üblicherweise auf zwei gegenüberliegende große Stirnflächen des Körpers Metallbeläge aufgebracht, an denen dann die Anschlußelemente befestigt werden. Anschließend wird der Bauelementekörper mit einem Isolierüberzug, vorzugsweise aus thermoplastischem oder duroplastischem, wärmebeständigen Kunststoff, versehen, z. B. mittels Formpressen, so daß die äußeren Teile der Anschlußelemente aus dem Isolierüberzug heraustreten. Der Kunststoff kann gegebenenfalls mit mineralischen oder anderen Füllstoffen in bekannter Weise gefüllt sein.

Die vorliegende Erfindung ist bei allen Bauelementen der hier in Rede stehenden Art anwendbar, sofern die Bauelemente an den gegenüberliegenden großen Stirnflächen des Körpers mit Anschlußelementen verbunden (oberflächenkontaktiert) sind, also nicht seitenkontaktiert sind.

Die oben genannten elektrischen Bauelemente sind in zahlreichen weiteren Veröffentlichungen hinreichend beschrieben. Für den Spezialfall elektrischer Kondensatoren in Chip-Bauweise, die dennoch auf den großen, gegenüberliegenden Stirnflächen mit Stromzuführungen versehen sind, wird auf die bereits genannte EP-A 0 162 149 hingewiesen, dort insbesondere FIG 4 und zugehörige Beschreibung. Auch die europäische Patentschrift EP-A 0 130 386 geht detailliert auf das Problem ein, die Anschlußelemente eines seitenkontaktierten Kunststoffolien-Wickelkondensators so durch die isolierende Umhüllung hindurch zu führen und danach an der Oberfläche der Umhüllung umzubiegen, daß dieses als Chip-Bauelement verwendet werden kann.

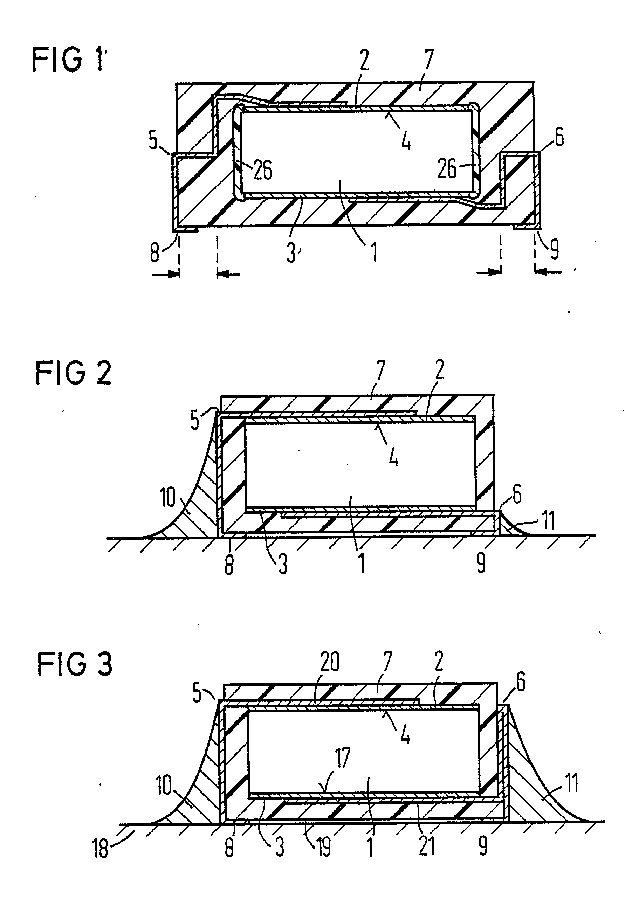

In der nicht vorveröffentlichten DE-OS 36 38 286.8 vom 10.11.1986 sind in FIG 2 SMD-Varistoren gezeigt, die im Rahmen der Siemens-Typenreihe SIOV-CU4032 bereits im Handel und damit Stand der Technik sind. Die beiliegende FIG 1, die der erwähnten FIG 2 entspricht, zeigt, daß bandförmige Anschlußelemente zwischen Bauelementkörper und Oberfläche des Isolierüberzuges mit Abknickungen versehen sind. Erst dann sind die Anschlußelemente nach außen geführt und dort Lötflächen bildend umgebogen. Bei parallel an die Oberflächen direkt herangeführten Anschlußelementen (vgl. beiliegende FIG 2) entstehen ungleich lange Teile an den zur Schaltplattenfläche senkrechten Oberflächenelemente des Isolierüberzuges.

Dies führt zu einer unsymmetrischen Lotbenetzung beim Lötvorgang und bewirkt den sogenannten Tombstone-Effekt, der später anhand der beiliegenden FIG 2 erläutert wird.

Wie aus FIG 1 ersichtlich ist, gewährleistet die bisher durchgeführte Methode des Abknickens der Anschlußelemente innerhalb des Isolierüberzuges zwar eine ausreichende und symmetrische Benetzung der außenliegenden Kontaktstellen mit Lot, jedoch ist hierfür ein erheblicher räumlicher Aufwand erforderlich. Das Isoliererfordernis für sich würde keineswegs die bisher üblichen seitlichen Dicken des Isolierüberzuges der Bauelemente notwendig machen. Im normalen Betrieb kann man von ca. 2000 V als höchster Spannungsbelastung der hier in Rede stehenden Varistoren ausgehen. Andererseits können die verwendeten Kunststoffe mit ca. 40 000 V pro mm belastet werden. Bei diesem im Preßverfahren hergestellten Isolierüberzug wird somit ein räumlicher Aufwand betrieben, der sich nur aus der speziellen räumlichen Anordnung der Anschlußelemente erklärt.

Der vorliegenden Erfindung liegt die Aufgabe zugrunde, ein elektrisches Bauelement in Chip-Bauweise und ein Verfahren zu seiner Herstellung anzugeben, bei dem trotz Oberflächenkontaktierung des Körpers des Bauelements mit bandförmigen Anschlußelementen das aktiv ausgenützte Volumen. des Bauelementkörpers praktisch dem Gesamtvolumen des Bauelementes (Körper und Überzug) entspricht, daß also die äußeren Abmessungen des elektrischen Bauelementes nicht wesentlich durch die räumliche Konfiguration der Anschlußelemente bestimmt werden.

Zur Lösung dieser Aufgabe ist das elektrische Bauelement der eingangs angegebenen Art erfindungsgemäß gekennzeichnet durch die Merkmale:

a) Die flächig an den Belegungen befestigten Anschlußelemente sind ohne Abknickung in Höhe der Stirnflächen des Körpers durch den Isolierüberzug hindurch nach außen geführt,

b) außerhalb des Isolierüberzuges ist das auf der in Bezug auf die Schaltplatte oberen Seite des Körpers befestigte Anschlußelement nach unten hin abgeknickt, an der Oberfläche des Isolierüberzuges entlanggeführt und dann auf die Unterseite desselben abgebogen,

c) außerhalb des Isolierüberzuges ist das auf der unteren Seite des Körpers befestigte Anschlußelement zunächst nach oben hin abgeknickt, dann an der Oberfläche des Isolierüberzuges bis in Höhe der Austrittsstelle des ersten Anschlußelementes verlaufend angeordnet, in dieser Höhe um 180° umgebogen und am Anschlußelement anliegend ebenfalls bis unter die Unterseite des Isolierüberzuges abgebogen;

Durch die Erfindung wird gegenüber dem Stand der Technik nicht nur eine erhebliche Verringerung des erforderlichen Platzbedarfs für den Isolierüberzug erzielt, sondern ein weiterer Vorteil besteht darin, daß innerhalb des Isolierüberzuges die Anschlußelemente nicht abgeknickt sind und daß der Biegevorgang zum Anlegen der Anschlußelemente an die Oberfläche des Isolierüberzuges beträchtlich einfacher verläuft.

Eine bevorzugte Ausführungsform ist dadurch gekennzeichnet, daß der an der oberen Metallbelegung befestigte Teil des oberen Anschlußelementes und der an der unteren Metallbelegung befestigte Teil des unteren Anschlußelementes einander in Bezug auf die Länge überlappen.

Diese Ausführungsform gewährleistet, daß der Bauelementekörper bis zur Umhüllung mit Isolierstoff noch besser gehalten wird.

Das Verfahren der eingangs angegebenen Art zur Herstellung eines solchen elektrischen Bauelements ist zur Lösung der Aufgabe erfindungsgemäß gekennzeichnet durch die Verfahrensschritte:

a) jeder zweite Leitersteg wird in zwei Teile aufgeteilt und ein Teil davon wird aus der Ebene des Bandes um 90° umgebogen und danach wieder parallel zur Ebene des Bandes hingebogen,

b) zwischen die derart geformten Teile der Leiterstege wird der mit den Belegungen versehene Körper so eingefügt, daß zwischen dem senkrecht stehenden Teil des Leiterstegteiles und dem Rand.des Körpers ein freier Raum bleibt, der eine ausreichende Isolation zwischen der Belegung und dem Anschlußelement im umhüllten Bauelement gewährleistet,

c) der mit den Belegungen versehene Körper und die parallel zu den Stirnseiten verlaufenden Teile der Anschlußelemente werden mit der Isolierumhüllung derart umpreßt, daß ihre äußere Oberfläche mit dem senkrechten Teil des Anschlußelementes zusammenfällt, und gleichzeitig oder nachfolgend der Kunststoff der Isolierumhüllung ausgehärtet wird,

d) die senkrecht aus der Oberfläche der Isolierumhüllung herausstehenden Anschlußelemente werden in einer Länge abgetrennt, die ausreicht, um beide Anschlußelemente an der Oberfläche der Isolierumhüllung entlanglaufend und bis auf ihre Unterseite reichend umzubiegen.

Gegenüber dem Stand der Technik ist dieses Verfahren offensichtlich einfacher durchzuführen.

Die Erfindung wird nachfolgend anhand der in den Figuren dargestellten Ausführungsbeispiele näher erläutert.

Es zeigen

FIG 1 eine Ausführungsform, die dem Stand der Technik zuzurechnen ist,

FIG 2 eine nicht erfindungsgemäße Ausführungsform mit unsymmetrischer Lotbenetzung,

FIG 3 die erfindungsgemäße Ausführung eines Bauelementes,

FIG 4 u. 5 die Verfahrensschritte bei der Herstellung eines erfindungsgemäßen Bauelementes,

FIG 6 verschiedene mögliche Ausführungsformen der Ausbildung der Anschlußelemente.

In FIG 1 wird ein Bauelement gezeigt, das als Surface-mounted-device ausgeführt ist. Der Körper 1 ist beidseitig mit Belegun gen 2 und 3 versehen, an denen Anschlußelemente 5 und 6 aufgelötet sind. Die Umfangsfläche des Körpers 1 ist mit einer Polyimidumhüllung 26 abgedeckt. Der Körper 1 und teilweise auch die Anschlußelemente 5 und 6 sind von einem Isolierüberzug 7 aus Polyphenylensulfid (PPS) eingeschlossen, der beim späteren Löten eine hohe Hitzebeständigkeit gewährleistet. Die aus dem Isolierüberzug 7 herausragenden Teile der Anschlußelemente 5 und 6 sind so umgebogen, daß sie Kontaktstellen 8 und 9 bilden, wie sie für Surface-mounted- devices bekannt und typisch sind. Den in dem Isolierüberzug verlaufenden Anschlußelementen 5 und 6 wird vor dem Auflöten auf die Belegungen 2 und 3 durch Prägung (zweimaliges Abknicken) die in der Zeichnung dargestellte spezielle Form verliehen, damit die Anschlußelemente außerhalb des Isolierüberzuges zu gleichgroßen Lotanhäufungen ·10 und 11 (FIG 3) führen. Diese Formgebung ist raumaufwendig, wie durch die Pfeile angedeutet. .

FIG 2 zeigt ein Bauelement, bei dem die Anschlußelemente 5 und 6 ohne vorherige Formgebung durch Prägung in Höhe des Körpers 1 aus dem Isolierüberzug herausgeführt und danach auf die Unterseite desselben abgebogen sind. Hierdurch wird zwar ein Platzverlust wie in FIG 1 angedeutet vermieden, jedoch kommt es erkennbar zu einer stark unsymmetrischen Lotbenetzung. Diese hat den sogenannten und bekannten Tombstone-Effekt zur Folge, bei dem wegen der unsymmetrischen Lotbenetzung Auftriebskräfte entstehen, die in diesem Fall die Kontaktstelle 9 "hochziehen", so daß das Chip-Bauelement wie ein schräger Grabstein aufliegt.

In FIG 3 ist ein erfindungsgemäßes Ausführungsbeispiel dargestellt. Die in FIG 1 gezeigte Polyimidumhüllung 26 ist hier nicht dargestellt, weil sie nur in besonderen fällen erforderlich ist, z. B. bei der Verwendung eines Kunststoffes als Umhüllung, der für die Keramik schädliche Stoffe absondert. Durch die in der Zeichnung dargestellte spezielle Faltung des auf der unteren Seite des Körpers befestigten Anschlußelementes 6 wird einerseits eine ungleiche Größe der Kontaktstellen 10 und 11 und damit der Tombestone-Effekt vermieden. Andererseits ergibt sich gegenüber der bekannten Ausführungsform in FIG 1 ein erheblicher Platzgewinn. In der technischen Praxis bedeutet dies, daß durch die geänderte Kontaktkonfiguration die Bauform z. B. des Varistortyps CU4032 auf die nächst kleinere Rastermaßgröße verringert werden kann, z. B. von Rastermaß 7,5 mm auf 5,0 mm.

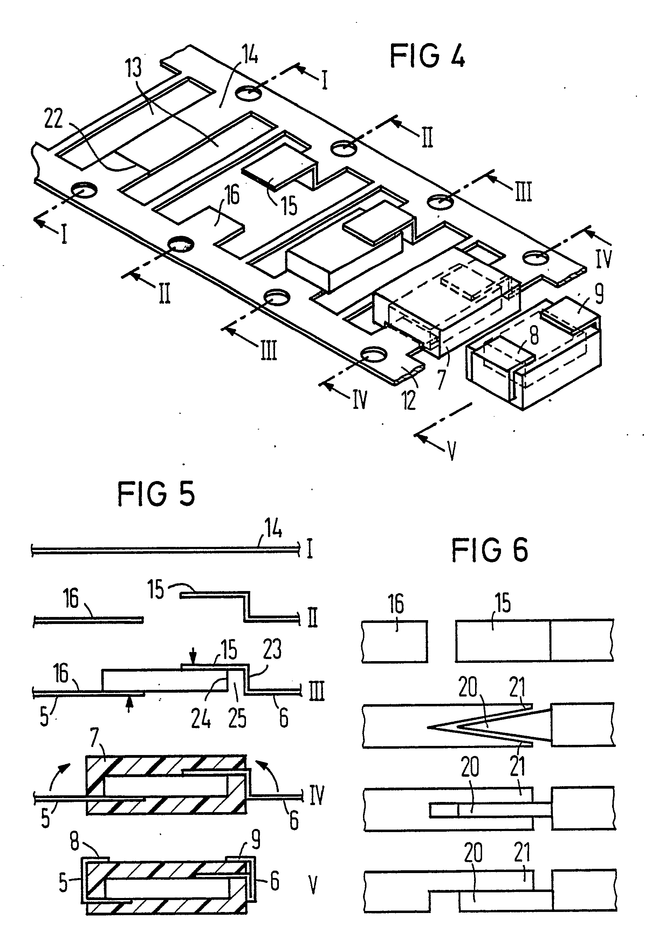

In den FIG 4 und 5 ist das Herstellungsverfahren gezeigt. Dabei werden die jeweiligen Herstellungsschritte I. bis V. in FIG 4 der Zeichnung perspektivisch und in FIG 5 im Schnitt dargestellt. Ein Metallband 12 aus beidseitig feuerverzinntem, insbesondere mit Zinn-Blei-Lot versehenem biegsamen Metall mit einer Auflage von etwa 4 bis 8 $\mu$ je Seite ist mit Ausnehmungen l3 derart versehen, daß die als Anschlußelemente 5 und 6 dienenden Leiterstege 14 mit dem Metallband verbunden bleiben. Derartige Metallbänder und Verfahrensschritte sind an sich aus der Halbleitertechnik, insbesondere der IC-Technik bekannt, ferner auch aus der EP-A 0 162 149, die oben schon genannt ist.

Jeder zweiter Leitersteg wird aufgeteilt und ein Teil wird entsprechend der Form des einzusetzenden Bauelements umgebogen.

Im Verlauf des weiteren Verfahrens werden die Bauelementekörper 1 samt Belegungen 2 und 3 zwischen die Teile 15 und 16 der Leiterstege geschoben.

Im nächsten Verfahrensschritt werden die Teile 15 und 16 mit den Belegungen 2 und 3 derart verbunden, daß zwischen dem senkrecht stehenden Teil 23 des Leiterstegteiles 15 und dem Rand 24 des Körpers 1 ein leerer Raum 25 verbleibt, der einerseits einen ausreichenden Isolierabstand zwischen dem Anschlußelement 6 und der gegenpoligen Belegung 3 gewährleistet und andererseits groß genug ist, damit Isoliermaterial eindringen kann. Im nächsten Verfahrensschritt wird um den Bauelementekörper 1 und die Teile 15 und 16 der Leiterstege ein Isolierüberzug 7 aus Kunststoff erzeugt, dessen Dicke zweckmäßigerweise nur bis 1,5 mm beträgt, und zwar sowohl im Bereich der mit den Belegungen 2, 3 versehen großen Stirnflächen, als auch im Bereich der Umfangsfläche des Körpers 1, wo die Raumersparnis durch die Erfindung erzielt wird. Hierfür verwendbare Herstellungsverfahren sind hinreichend bekannt, beispielsweise bei der Herstellung von Überzügen für Halbleiterbauelemente und integrierte Schaltungen (IC) durch Umpressen, Umspritzen, Umsintern.

Im nächsten Verfahrensschritt werden die mit dem Isolierüberzug 7 versehenen elektrischen Bauelemente, vorzugsweise die Varistoren vom Band abgetrennt, so daß einzelne Körper vorliegen, bei denen die Anschlußelemente 5 und 6 aus dem Isolierüberzug 7 herausragen. Diese herausragenden Teile werden längs der Oberfläche des Isolierüberzuges 7 verlaufend umgebogen, so daß zumindest die Kontaktstellen 8 und 9 entstehen.

In FIG 6 sind verschiedene Möglichkeiten der Aufteilung der Leiterstege 14 in die beiden einander in der Länge zungenförmig überlappenden Teile 15 und 16 dargestellt. Solche Formen können erforderlich werden, falls, je nach Ausführungsform des Bauelementekörpers, sonst nach der Faltung des Leiterstegteiles 15 dieses nicht mehr ausreichend lang ist.

Bezugszeichenliste

1 Körper des elektrischen Bauelementes
2 Belegung
3 Belegung
4 obere Seite des Körpers 1
5 Anschlußelement
6 Anschlußelement
7 Isolierüberzug
8 Kontaktstelle
9 Kontaktstelle
10 Lotanhäufung
11 Lotanhäufung
12 Metallband
13 Ausnehmungen
14 Leiterstege
15 Teil der Leiterstege
16 Teil der Leiterstege
17 untere Seite des Körpers
18 Schaltplatte
19 Unterseite des Isolierüberzuges 7
20 Teil des Anschlußelementes 5
21 Teil des Anschlußelementes 6
22 aufgeteilter Leitersteg
23 senkrecht stehender Teil des Leiterstegteiles 15
24 Rand des Körpers 1
25 leerer Raum zwischen Rand 24 und Teil 23
26 Umhüllung aus Polyimid auf der Umfangsfläche des Körpers 1

**Ansprüche**

1. Elektrisches Bauelement in Chip-Bauweise zum Befestigen auf einer Schaltplatte, das aus einem scheiben- oder plättchenförmigen Körper (1) aus elektrisch wirksamem Material besteht, der auf seinen gegenüberliegenden großen Stirnflächen mit Belegungen (2, 3) versehen ist, das ferner bandförmige Anschlußelemente (5, 6) zum Verbinden der Belegungen (2, 3) entgegengesetzter Polarität mit Kontaktstellen (8, 9) einer auf der Schaltplatte (18) befindlichen gedruckten Schaltung aufweist und das mit einem plättchen- oder quaderförmigen Isolierüberzug (7) umpreßt ist, **gekennzeichnet** durch die Merkmale:

a) die flächig an den Belegungen (2, 3) befestigten Anschlußelemente (5, 6) sind ohne Abknickung in Höhe der Stirnflächen des Körpers (1) durch den Isolierüberzug (7) hindurch nach außen geführt,

b) außerhalb des Isolierüberzugs (7) ist das auf der in Bezug auf die Schaltplatte (18) oberen Seite (4) des Körpers (1) befestigte Anschlußelement (5) nach unten hin abgeknickt an der Oberfläche des Isolierüberzuges (7) entlanggeführt und dann auf die Unterseite (19) desselben abgebogen,

c) außerhalb des Isolierüberzugs (7) ist das auf der unteren Seite (17) des Körpers (1) befestigte Anschlußelement (6) zunächst nach oben hin abgeknickt, dann an der Oberfläche des Isolierüberzuges (7) bis in Höhe der Austrittsstelle des ersten Anschlußelementes (5) verlaufend angeordnet, in dieser Höhe um $180^\circ$ umgebogen und am Anschlußelement (6) anliegend ebenfalls bis unter die Unterseite (19) des Isolierüberzuges (7) abgebogen.

2. Elektrisches Bauelement nach Anspruch 1, **dadurch gekennzeichnet,** daß der an der oberen Metallbelegung (2) befestigte Teil (20) des oberen Anschluß elementes (5) und der an der unteren Metallbelegung (3) befestigte Teil (21) des unteren Anschlußelementes (6) einander in Bezug auf die Länge überlappen.

3. Verfahren zur Herstellung eines elektrischen Bauelements nach Anspruch 2, bei dem ein Band (12) aus Metall zunächst mit Ausnehmungen (13) in Form einer Leiter derart versehen wird, daß Leiterstege (14) gebildet und aufgeteilt werden, die Bauelemente (1) zwischen die aufgeteilten Leiterstege (14) eingesetzt, mit ihnen verbunden und mit der Umhüllung (7) versehen werden, **gekennzeichnet** durch die Verfahrensschritte:

a) jeder zweite Leitersteg (22) wird in zwei Teile (15, 16) aufgeteilt und ein Teil (15) davon wird aus der Ebene des Bandes (12) um $90^\circ$ umgebogen und danach wieder parallel zur Ebene des Bandes (12) hingebogen,

b) zwischen die derart geformten Teile (15, 16) der Leiterstege (22) wird der mit den Belegungen (2, 3) versehene Körper (1) so eingefügt, daß zwischen dem senkrecht stehenden Teil (23) des Leiterstegteiles (15) und dem Rand (24) des Körpers (1) ein freier Raum (25) bleibt, der eine ausreichende Isolation zwischen der Belegung (2) und dem Anschlußelement (6) im umhüllten Bauelement gewährleistet,

c) der mit den Belegungen (2, 3) versehene Körper (1) und die parallel zu den Stirnseiten verlaufenden Teile (15, 16) der Anschlußelemente (5, 6) werden mit der Isolierumhüllung (7) derart umpreßt, daß ihre äußere Oberfläche mit dem senkrechten Teil (23) des Anschlußelementes (6) zusammenfällt, und gleichzeitig oder nachfolgend der Kunststoff der Isolierumhüllung (7) ausgehärtet wird,

d) die senkrecht aus der Oberfläche der Isolierumhüllung (7) herausstehenden Anschlußelemente (5, 6) werden in einer Länge abgetrennt, die ausreicht, um beide Anschlußelemente (5, 6) an der Oberfläche der Isolierumhüllung (7) entlanglaufend und bis auf ihre Unterseite (19) reichend umzubiegen.

4. Verfahren zur Herstellung eines elektrischen Bauelements nach Anspruch 2, **dadurch gekennzeichnet,** daß im Verfahrensschritt a) die Aufteilung jedes zweiten Leitersteges (22) in zwei Teile (20, 21) derart durchgeführt wird, daß diese beiden Teile (20, 21) zungenförmig ineinander greifen.

FIG 1

FIG 2

FIG 3

FIG 4

FIG 5

FIG 6

| | Europäisches Patentamt | EUROPÄISCHER RECHERCHENBERICHT | Nummer der Anmeldung |
|---|---|---|---|
| | | | EP 89 10 0969 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 412 492 (SIEMENS AG) --- | | H 01 G 1/035 H 01 C 13/02 |
| A | US-A-4 497 012 (ROGERS CORP.) --- | | |
| A | WO-A-8 500 463 (MATSUSHITA ELEC.) --- | | |
| A | DE-B-1 564 692 (SIEMENS AG) --- | | |
| P,D A | DE-A-3 638 286 (SIEMENS AG) * Figur 2 * ----- | 1 | |
| | | | RECHERCHIERTE SACHGEBIETE (Int. Cl.4) |
| | | | H 01 G H 01 C |

Der vorliegende Recherchenbericht wurde für alle Patentansprüche erstellt

| Recherchenort | Abschlußdatum der Recherche | Prüfer |
|---|---|---|
| DEN HAAG | 17-05-1989 | SCHUERMANS N.F.G. |